# EUROPEAN PATENT SPECIFICATION

(11) **EP 1 160 781 B1**
(45) Date of publication and mention of the grant of the patent: **13.04.2005**
(21) Application number: 00310159.9
(22) Date of filing: 15.11.2000
(51) Int. Cl.: G11B 7/24, G11B 20/12, G11B 23/40, G11B 23/38, G06F 17/60

(54) **Medium comprising advertising program area**
Medium mit Reklameprogrammzone
Support comportant une zone de programmation publicitaire

(30) Priority: 19.05.2000 KR 2000027024
(43) Date of publication of application: 05.12.2001
(73) Proprietor: SAMSUNG ELECTRONICS CO., LTD., Suwon-City, Kyungki-do (KR)
(72) Inventor: Ko, Jung-wan, Yongin-city, Kyungki-do (KR); Park, Jae-seong, Paldal-gu, Suwon-city, Kyungki-do (KR)
(74) Representative: Chugg, David John

(56) References cited:
- EP-A- 0 814 419
- EP-A- 1 118 944
- WO-A-00/14646
- WO-A-93/19427
- DE-A- 19 622 596
- US-A- 5 090 007
- US-A- 5 781 894
- US-A- 5 848 397
- PATENT ABSTRACTS OF JAPAN vol. 2000, no. 05, 14 September 2000 (2000-09-14) & JP 2000 059541 A (DAINIPPON PRINTING CO LTD), 25 February 2000 (2000-02-25)
- PATENT ABSTRACTS OF JAPAN vol. 2000, no. 05, 14 September 2000 (2000-09-14) & JP 2000 059538 A (DAINIPPON PRINTING CO LTD), 25 February 2000 (2000-02-25)

## Description

The present invention relates to a read-only medium or readable and rewritable medium, and more particularly, to a read-only or readable and rewritable medium having a reduced cost and providing advertising, and a method of using the same.

Optical discs can be classified into read-only media designed for a user to use previously recorded information and readable and rewritable media to which new information can be written. Compact discs (CDs) fall under the former, and digital versatile discs (DVDs) and hybrid discs fall under the latter. Hybrid discs are high density and multi-functional optical discs on which reading only and rewriting can be realized together.

Read-only media are used when disc manufacturers provide information which are expected to be needed by users. Accordingly, users may need to purchase many read-only media to obtain desired information. In this case, users (or customers) may be burdened with the cost for purchasing them.

Users can record desired information on recordable media. However, users need to purchase another new medium when the entire area of a given medium is used for recording of information. In this case, also, users are burdened with the cost. Since recordable media are more expensive than read-only media, the financial burden on users is larger.

DE 19622596 describes the inclusion of advertisements CD-ROM disks along with new software to provide an additional revenue stream for software producers.

US 5090007 describes an optical record carrier having an information track structure on the surface or thereof, with one or more of the tracks being pre-recorded with standard information pertaining to a particular class of information of common use to an undefined number of users.

An aim of embodiments of the present invention is to provide a read-only medium or a readable and rewritable medium in which a user area is linked to an advertisement, thereby minimizing the cost to a user and improving advertising efficiency.

Another aim of embodiments of the present invention is to provide a method of using the above medium.

According to a first aspect of the present invention there is provided a medium comprising an advertising area including information related to an advertisement; and a user area which a user is allowed to read information from when the user views or watches the information recorded in the advertising area, the medium characterised in that it comprises: control information for allowing a user to rewrite information to the user area when the user views or watches the information recorded in the advertising area, and in that the advertising area is set in two or more separate areas, at least one of the two separate areas being a read-only area and the other area(s) being re-writeable.

It is preferable that the advertising area is set in a predetermined area adjacent to a lead-in area.

The medium may further comprise a file system area in which information related to the advertising area is recorded so that the user views or watches all the advertisement related information when the medium is loaded in a reading apparatus or a reading and rewriting apparatus.

The medium may further comprise a file system area in which information related to the advertising area is recorded so that the user views or watches all the advertisement related information when the user attempts to read information from the medium for the first time.

The medium may further comprise a file system area in which information related to the advertising area is recorded so that the user views or watches all the advertisement related information based on an application program which the user calls to write or read information to or from the user area.

The medium may further comprise a file system area in which identification information on an advertiser is recorded to allow the information in the advertising area to be updated with data provided by the advertiser through a communication network.

Advertisement contents of a plurality of advertisers may be recorded in the advertising area.

The medium may further comprise a file system area in which information for allowing the advertisement contents recorded in the advertising area to be sequentially accessed is recorded.

The medium may further comprise a file system area in which information related to a predetermined order is recorded to allow the advertisement contents recorded in the advertising area to be accessed according to the predetermined order.

The medium may further comprise a file system area in which the number of accesses to an advertisement recorded in the advertising area is recorded.

According to another aspect, there is provided a method of using a medium comprising a predetermined area including advertisement information and a user area which a user is selectively allowed to read information from or rewrite information to the method comprising the steps of:
(a) displaying an advertisement recorded in the predetermined area to be viewed or watched by a user; and
(b) allowing the user to read information from a user area on the medium after the step (a),

The method characterised in that step (b) further comprises the step of allowing the user to rewrite information to the user area based on control information recorded on the medium and the completion of step (a); and in that the advertising area is set in two or more separate areas, at least one of the two separate areas being a read-only area and the other area(s) being re-writeable.

The step (a) may be performed when the user loads the medium in the reading apparatus or the reading and rewriting apparatus.

The step (a) may further comprise the steps of: (a1) accessing through a communication network an advertiser server corresponding to the advertisement recorded on the medium when the medium is loaded in the reading apparatus or the reading and rewriting apparatus; (a2) checking whether advertisement information that can be updated or needs to be updated exists in the advertisement recorded in the predetermined area when a link to the advertiser server is established; (a3) updating the advertisement information when it is determined that advertisement information to be updated exists; and (a4) displaying the advertisement recorded in the predetermined area to be viewed or watched by the user when it is determined that advertisement information to be updated does not exist or after the step (a3).

The steps (a2) and (a3) may be performed on a single frame or a single advertising unit.

The checking operation in the step (a2) may be performed through communication with the advertiser server.

The step (a) may also include the steps of: (a1) determining whether a difference between a time when the medium was last loaded and a time when the medium is presently loaded exceeds a predetermined time, or whether the number of loadings of the medium exceeds a predetermined number, when the medium is loaded into the reading apparatus or the reading and rewriting apparatus; (a2) accessing an advertiser server corresponding to the advertisement recorded on the medium through a communication network, when it is determined that more than the predetermined time elapses or that more than the predetermined number is counted; (a3) checking whether advertisement information that can be updated or needs to be updated exists in the advertisement recorded in the predetermined area when a link to the corresponding advertiser server is established; (a4) updating the advertisement information when it is determined that the advertisement information exists in the step (a3); and (a5) displaying the advertisement recorded in the predetermined area to be viewed or watched by the user when the predetermined time has not yet elapsed or the predetermined number is not counted yet in step (a1) or that the advertisement information does not exist in the step (a3), or when the step (a4) is completed.

The step (a1) preferably forwards identification information on the advertiser server through the communication network to perform the access.

The step (a) is preferably performed when a reading or rewriting operation on the user area on the medium is requested by the user.

The step (a) may comprise the steps of: (a1)checking whether a difference between a previous request time and a current request time exceeds a predetermined time or whether the number of requests exceeds a predetermined number when the reading or rewriting operation on the user area is requested; (a2) accessing an advertiser server corresponding to the advertisement recorded on the medium through a communication network, when more than the predetermined time elapses or that more than the predetermined is counted in step (a1); (a3) checking whether advertisement information that can be updated or needs to be updated exists in the advertisement recorded in the predetermined area when a link to the corresponding advertiser server is established; (a4) updating the advertisement information when it is determined that the advertisement information exists in the step (a3); and (a5) displaying the advertisement recorded in the predetermined area to be viewed or watched by the user when it is determined that the predetermined time does not elapse yet or the predetermined number of times has not yet been counted in step (a1) or that the advertisement information does not exist in the step (a3), or when the step (a4) is completed.

The step (a) may be performed such that the advertisement is viewed or watched by the user through a predetermined area of an application program when the application program for performing reading or rewriting on the user area on the medium is called by the user.

The step (a) may comprise the steps of: (a1) determining whether a difference between a previous call time for the application program and a current call time for the application program exceeds a predetermined time, or whether the number of calls for the application program exceeds a predetermined number; (a2) accessing an advertiser server corresponding to the advertisement recorded on the medium through a communication network, when more than the predetermined time elapses or that more than the predetermined number is counted in step (a1); (a3) checking whether advertisement information that can be updated or needs to be updated exists in the advertisement recorded in the predetermined area when a link to the corresponding advertiser server is established; (a4) updating the advertisement information when it is determined that the advertisement information exists in the step (a3) ; and (a5) displaying the advertisement recorded in the predetermined area to be viewed or watched by the user when the predetermined time has not yet elapsed or the predetermined number has not yet been counted in step (a1) or that the advertisement information does not exist in the step (a3), or when the step (a4) is completed.

The application program may include an area for displaying the folder structure of the medium, an area for displaying the contents of the folder and an area for displaying an advertisement.

The application program may read the advertisement recorded in the predetermined area such that the advertisement is displayed in the form of a banner through the area for displaying an advertisement.

The step (a) may comprise the steps of: (a1) sequentially accessing advertisement contents of a plurality of advertisers, which are recorded in the predetermined area; and (a2) displaying the advertisement contents to be viewed or watched by the user according to the order in which the contents are accessed in the step (a1).

The step (a) may further comprise the steps of: (a1) accessing the advertisement contents of a plurality of advertisers, which are recorded in the predetermined area, according to a predetermined order; and (a2) displaying the advertisement contents to be viewed or watched by the user according to the predetermined order in the step (a1).

The method may further comprise the step of (c) recording and managing the number of accesses to each content of advertisement displayed in the step (a2).

For a better understanding of the invention, and to show how embodiments of the same may be carried into effect, reference will now be made, by way of example, to the accompanying diagrammatic drawings in which:
Figure 1 is a block diagram illustrating the relation between a provider and a customer for explaining the provision of a medium and a method of using the medium according to embodiments of the present invention;
Figures 2A and 2b illustrate examples of the structure of a medium according to the present invention;
Figure 3 illustrates an example of the screen of an exclusive application program for using a medium according to the present invention; and
Figure 4 is a flowchart of a method of using a medium according to an embodiment of the present invention.

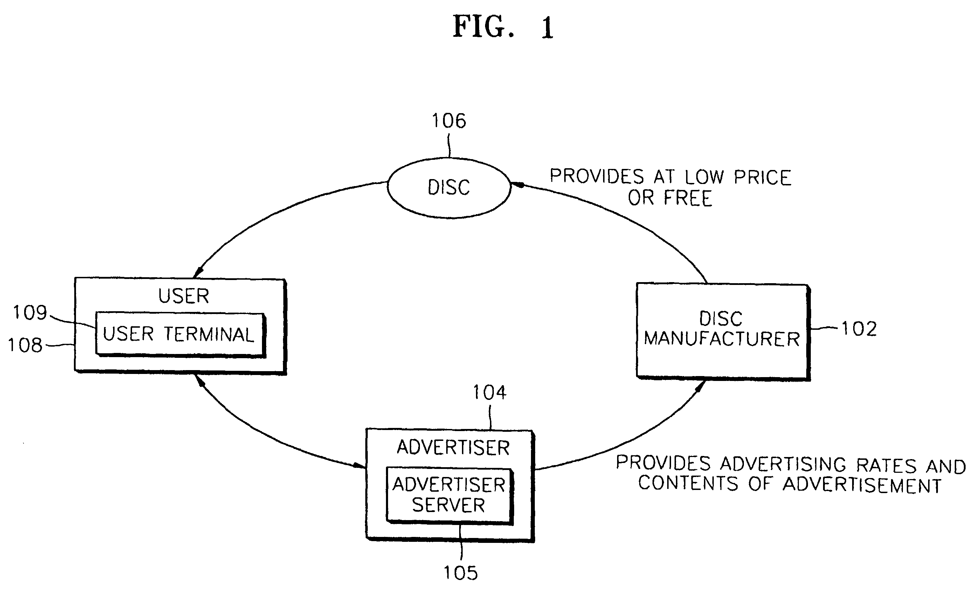

Referring to Figure 1, the block diagram illustrating the relation between a provider and a customer includes a disc manufacturer 102, an advertiser 104 having an advertiser server 105, a disc 106 corresponding to a medium according to the present invention, and a user 108 having a user terminal 109.

The disc manufacturer 102 is a provider which provides to the user 108 the disc 106 which can be used as a read-only medium or a readable and rewritable medium according to the present invention. The disc manufacturer 102 is provided with advertising rates and the contents of an advertisement by the advertiser 104 through a usual method. The provided contents of advertisement is recorded in a predetermined area on the disc 106. The disc 106 is produced such that the user 108 is allowed to use a user area on the condition that the user 108 views the contents of an advertisement recorded on the predetermined area, and is provided for the user 108 at a low price or for free. The predetermined area is equal to or larger than one sector or one error correction code (ECC) block on the disc 106.

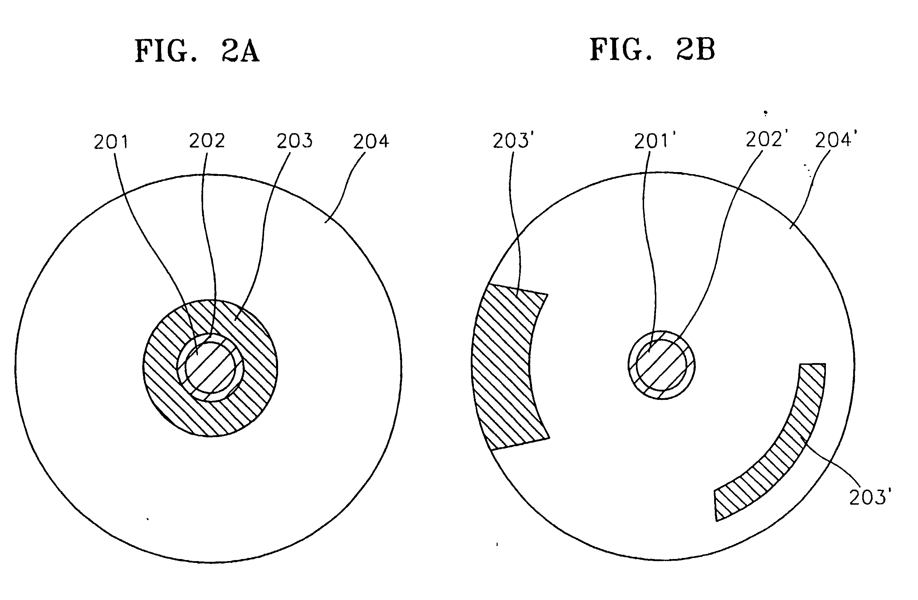

The disc 106 provided by the disc manufacturer 102 may be structured as shown in Figure 2A or 2B. In the structure of Figure 2A, a predetermined area adjacent to a lead-in area 201 is set as an exclusive advertising area 203, and the remaining area other than the exclusive advertising area 203 and the lead-in area 201 is set as a user area 204. In the structure of Figure 2B, two separate predetermined areas are set as exclusive advertising areas 203', and the remaining area other than a lead-in area 201' and the exclusive advertising area 203' is set as a user area 204'.

In Figures 2A and 2B, the entire exclusive advertising areas 203 and 203' may be set to be read-only areas (areas like read-only memories (ROMs)) or rewritable areas (areas like random access memories (RAMs)). Alternatively, the entire exclusive advertising areas 203 and 203' may be set such that some area is a read-only area and the other area is rewritable area.

More specifically, in the case of Figure 2A, the part of the exclusive advertising area 203 closest to the lead-in area 201 may be set to be a read-only area, and the remaining area may be set to be a rewritable area. Alternatively, the entire exclusive advertising area 203 may be set to be a read-only area or a rewritable area. In the case of Figure 2B, one of the two separate exclusive advertising areas 203' may be set to be a rewritable area, and the other may be set to be a read-only area. Alternatively, the two areas may be set to be read-only areas or rewritable areas. A rewritable exclusive advertising area can be updated with new contents of an advertisement by the advertiser server 105 of the advertiser 104. More separate areas than illustrated in Figure 2B may be set as an exclusive advertising area on the disc 106.

The lead-in areas 201 and 201' have the same uses as conventional ones. In particular, control information, which is necessary for allowing a user to use a user area on the condition that the user watches or views an advertisement provided through the disc 106, is recorded in file system areas 202 and 202' existing in the lead-in areas 201 and 201', respectively. For example, when the disc 106 is designed to have user 108 watch or view an advertisement recorded on the disc 106 when the disc 106 is loaded in the user terminal 109, related information is recorded in the file system area 202 or 202' so that an advertisement recorded in the exclusive advertising area 203 or 203' can be forced to be read before the user area 204 or 204' is used.

The user terminal 109 is an apparatus capable of reading or reading and rewriting with respect to the loaded disc 106, for example, a computer having an optical disc driving function and a communication function or an optical disc driving apparatus having a communication function.

The user terminal 109 operates based on the information recorded in the file system area 202 or 202' such that the user 108 can use the user area 204 or 204' only after the user 108 watches or views the contents of an advertisement recorded in the exclusive advertising area 203 or 203', when the disc 106 is loaded in the user terminal 109, when the user's request for using the user area 204 or 204' on the loaded disc 106 is generated, or when an exclusive application program for using the disc 106 is called by the user 108.

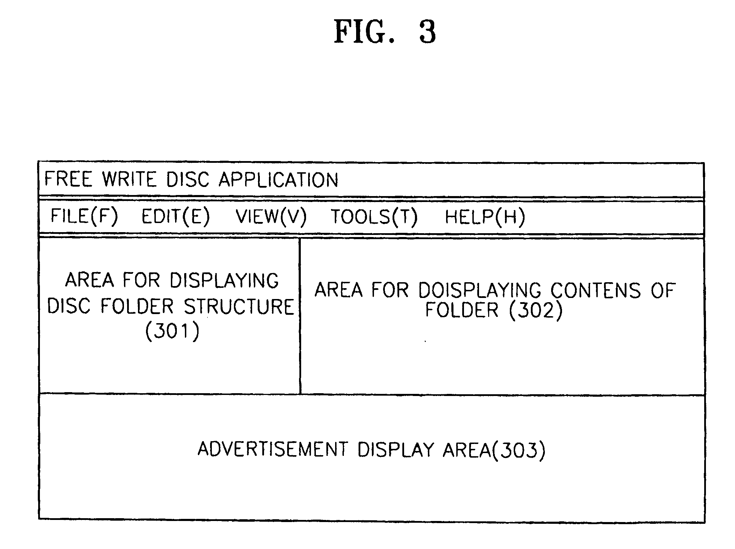

An example of a called exclusive application program is shown in Figure 3. Figure 3 illustrates an example of the screen of an exclusive application program for using the disc according to the present invention. This application program is called when the user 108 writes or reads information to or from the user area 204 or 204' on the disc 106 loaded in the user terminal 109. As shown in Figure 3, this application program includes an area 301 for displaying a disc folder structure of the user area 204 or 204', an area 302 for displaying the contents of a folder to inform the user 108 of the detailed contents of the folder, and an advertisement display area 303 for displaying the contents of an advertisement recorded in the exclusive advertising area 203 or 203' on the disc 106. The contents of an advertisement displayed on the advertisement display area 303 has the form of a banner.

The advertiser 104 provides the contents of an advertisement and advertising rates to the disc manufacturer 102 through a conventional method. The advertiser server 105 provides new advertisement contents to be updated to the user terminal 109 through a communication network. The advertiser 104 obtains the effect of the advertisement from the user 108. Communication between the advertiser server 105 and the user terminal 109 can be accomplished through the Internet, a digital data broadcasting network, an ordinary wire/wireless communication network or e-mail.

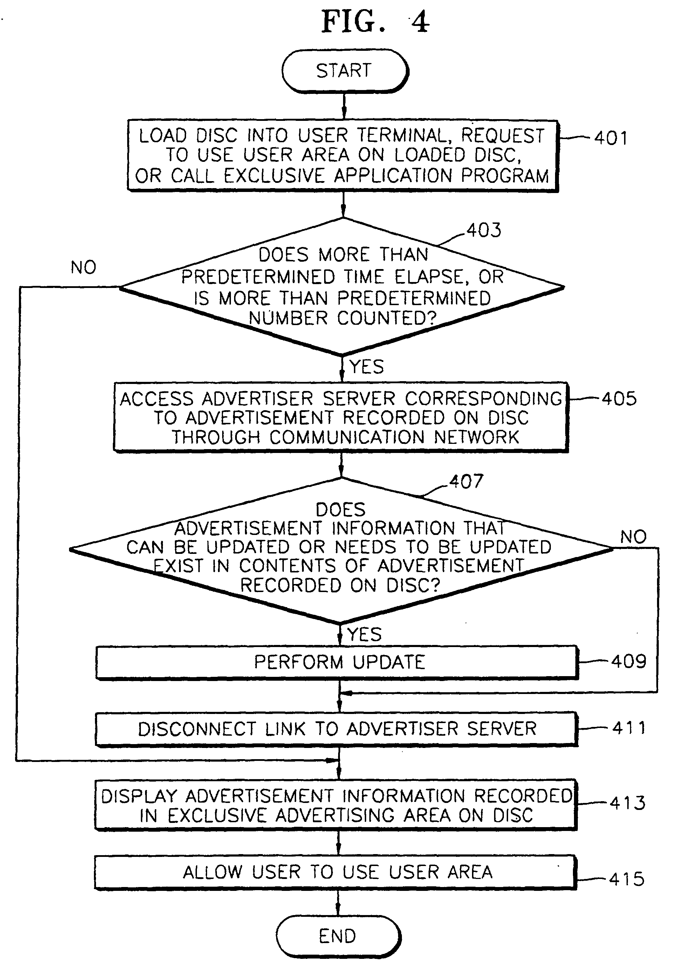

Figure 4 is a flowchart of a method of using a medium according to the present invention. Once the disc 106 is loaded in the user terminal 109, once the user 108 requests to use a user area on the loaded disc 106 through the user terminal 109, or once the user 108 calls an exclusive application program as shown in Figure 3 through the user terminal 109, in step 401, it is checked whether more than a predetermined time elapses or more than a predetermined number of the above events are counted in step 403.

More specifically, in the case where the disc 106 is configured such that an advertisement recorded on the disc 106 is presented when the disc 106 is loaded in the user terminal 109, in step 403, the user terminal 109 detects the difference between a time when the disc 106 was last loaded and a time when the disc 106 is presently loaded, and checks whether the detected difference exceeds a predetermined time. Alternatively, the user terminal 109 may count whenever the disc 106 is loaded, and check whether the counted value exceeds a predetermined number.

In the case where the disc 106 is configured such that the user terminal 109 operates depending on a user's request for using a user area in step 401, the user terminal 109 detects the difference between a time when a request for using the user area was last applied and a time when a request for using the user area is presently applied, and checks whether the detected difference exceeds a predetermined time, in step 403. Alternatively, the user terminal 109 may count whenever a use request is applied and check whether the counted value exceeds a predetermined number.

In the case where the disc 106 is configured such that the user terminal 109 calls an exclusive application program in step 401, the user terminal 109 detects the difference between a time when the exclusive application program was last called and a time when the exclusive application program is presently called, and checks whether the detected difference exceeds a predetermined time, in step 403. Alternatively, the user terminal 109 may count whenever the exclusive application program is called and check whether the counted value exceeds a predetermined number.

The disc 106 may be programmed such that the user terminal 109 accommodates both of the two checking methods or either of them in each case of the three cases described above. In other words, a predetermined time and a predetermined number of times may be selectively considered, or only one of them may be considered.

When it is determined that more than the predetermined time elapses or more than the predetermined number is counted in step 403, the user terminal 109 accesses the advertiser server 105 corresponding to an advertisement recorded on the disc 106, through a communication network in step 405. The access is performed by forwarding identification information on the advertiser 104 recorded in the file system area 202 or 202'. Accordingly, the advertiser server 105 having the same identification information as the forwarded identification information is linked to the user terminal 109.

When the link between the advertiser server 105 and the user terminal 109 is established in step 405, the user terminal 109 checks whether advertisement information that can be updated or needs to be updated exists in the contents of an advertisement recorded in the exclusive advertising area 203 or 203' on the disc 106 in step 407. The checking is performed by data transmission and reception between the advertiser server 104 and the user terminal 109.

When it is determined that advertisement contents to be updated exist, the user terminal 109 receives new corresponding advertisement contents from the advertiser server 105 and updates the advertisement content in step 409. The steps 407 and 409 are performed on a single frame or a single advertising unit. Thereafter, the user terminal 109 disconnects the link to the advertiser server 105 in step 411.

On the other hand, when it is determined that advertisement information that can be updated or needs to be updated does not exist in the contents of an advertisement recorded on the disc in step 407, the progress goes to the step 411, and the user terminal 109 disconnects the link to the advertiser server 105.

Meanwhile, when it is determined that the time difference or the counted value checked with respect to the loading of a disc, a user's request to use a user area or a call of an application program does not exceed the predetermined time or the predetermined number in step 403, or when the link to the advertiser server 105 is disconnected in step 411, the user terminal 109 displays the contents of the advertisement recorded in the exclusive advertising area 203 or 203' on the disc 106 in step 413. The user terminal 109 allows the user 108 to use the user area in step 415. Accordingly, the user 108 can read information from the user area or read and rewrite information from and to the user area.

In the case of Figure 4 described above, it seems that three cases are simultaneously processed in the steps 401 and 403, but they may be separately processed. In other words, the present invention may be implemented such that the method shown in Figure 4 is operated in response to only the loading of the disc 106 into the user terminal 109, only the request of using the user area on the loaded disc 106, or only the call for the exclusive application program.

A plurality of advertisements provided from a plurality of advertisers may be recorded on a single disc. In this case, when the disc is sequentially accessed, the advertisements may be sequentially displayed or may be displayed in predetermined order. In addition, information on the number of accesses to the advertisements and information on the order of accessing the advertisements can be recorded and managed in a file system area on a recordable disc area.

The present invention provides a read-only medium or a readable and rewritable medium, which includes an exclusive advertising area and a user area and is programmed such that the user area can be used on the condition that a user views an advertisement recorded on the exclusive advertising area, to a user at a low price or for free, and a method of using the same, thereby minimizing the cost of the user purchasing a read-only medium or a readable and rewritable medium. Consequently, the market of the above medium can be expected to flourish.

In addition, an advertiser can advertise or publicize business through another medium in addition to conventional media, thereby expanding the range of advertising or public relations and saving the cost for advertisement.

## Claims

1. A medium comprising:
an advertising area (203) including information related to an advertisement; and
a user area (204) which a user is allowed to read information from when the user views or watches the information recorded in the advertising area, the medium **characterised in that** it comprises:
control information for allowing a user to rewrite information to the user area when the user views or watches the information recorded in the advertising area, and **in that** the advertising area (203) is set in two or more separate areas, at least one of the two separate areas being a read-only area and the other area(s) being re-writeable.

2. The medium of claim 1, wherein the advertising area (203) is set in a predetermined area adjacent to a lead-in area (201).

3. The medium of claims 1 or 2, further comprising a file system area in which information related to the advertising area (203, 203') is recorded so that the user views or watches all the advertisement related information when the medium is loaded in a reading apparatus or a reading and rewriting apparatus.

4. The medium of claims 1 or 2, further comprising a file system area in which information related to the advertising area (203, 203') is recorded so that the user views or watches all the advertisement related information when the user attempts to read information from the medium for the first time.

5. The medium of claims 1 or 2, further comprising a file system area (202, 202') in which information related to the advertising area is recorded so that the user views or watches all the advertisement related information based on an application program which the user calls to write or read information to or from the user area.

6. The medium of claims 1 or 2, further comprising a file system area (202, 202') in which identification information on an advertiser is recorded to allow the information in the advertising area to be updated with data provided by the advertiser through a communication network.

7. The medium of any preceding claim, wherein advertisement contents of a plurality of advertisers are recorded in the advertising area.

8. The medium of claim 7, further comprising a file system area (202, 202') in which information for allowing the advertisement contents recorded in the advertising area to be sequentially accessed is recorded.

9. The medium of claim 7, further comprising a file system area (202, 202') in which information related to a predetermined order is recorded to allow the advertisement contents recorded in the advertising area to be accessed according to the predetermined order.

10. The medium of claim 1, further comprising a file system area (202, 202') in which the number of accesses to an advertisement recorded in the advertising area is recorded.

11. A method of using a medium comprising a predetermined area including advertisement information and a user area which a user is selectively allowed to read information from or rewrite information to the method comprising the steps of:
(a)displaying an advertisement recorded in the predetermined area to be viewed or watched by a user; and
(b) allowing the user to read information from a user area on the medium after the step (a),
the method **characterised in that** step (b) further comprises the step of allowing the user to rewrite information to the user area based on control information recorded on the medium and the completion of step (a); and **in that** the advertising area (203) is set in two or more separate areas, at least one of the two separate areas being a read-only area and the other area(s) being re-writeable.

12. The method of claim 11, wherein the step (a) is performed when the user loads the medium in the reading apparatus or the reading and rewriting apparatus.

13. The method of claim 11, wherein the step (a) comprises the steps of:
(a1) accessing through a communication network an advertiser server corresponding to the advertisement recorded on the medium when the medium is loaded in the reading apparatus or the reading and rewriting apparatus;
(a2) checking whether advertisement information that can be updated or needs to be updated exists in the advertisement recorded in the predetermined area when a link to the advertiser server is established;
(a3) updating the advertisement information when it is determined that advertisement information to be updated exists; and
(a4) displaying the advertisement recorded in the predetermined area to be viewed or watched by the user when it is determined that advertisement information to be updated does not exist or after the step (a3).

14. The method of claim 13, wherein the steps (a2) and (a3) are performed on a single frame or a single advertising unit.

15. The method of claim 13, wherein the checking operation in the step (a2) is performed through communication with the advertiser server.

16. The method of claim 12, wherein the step (a) comprises the steps of:
(a1) determining whether a difference between a time when the medium was last loaded and a time when the medium is presently loaded exceeds a predetermined time, or whether the number of loadings of the medium exceeds a predetermined number, when the medium is loaded into the reading apparatus or the reading and rewriting apparatus;
(a2) accessing an advertiser server corresponding to the advertisement recorded on the medium through a communication network, when it is determined that more than the predetermined time elapses or that more than the predetermined number is counted;
(a3) checking whether advertisement information that can be updated or needs to be updated exists in the advertisement recorded in the predetermined area when a link to the corresponding advertiser server is established;
(a4) updating the advertisement information when it is determined that the advertisement information exists in the step(a3); and
(a5) displaying the advertisement recorded in the predetermined area to be viewed or watched by the user when the predetermined time has not yet elapsed or the predetermined number is not counted yet in step (a1) or that the advertisement information does not exist in the step (a3), or when the step (a4) is completed.

17. The method of claim 13, wherein the step (a1) forwards identification information on the advertiser server through the communication network to perform the access.

18. The method of claim 11, wherein the step (a) is performed when a reading or rewriting operation on the user area on the medium is requested by the user.

19. The method of claim 18, wherein the step (a) comprises the steps of:
(a1)checking whether a difference between a previous request time and a current request time exceeds a predetermined time or whether the number of requests exceeds a predetermined number when the reading or rewriting operation on the user area is requested;
(a2) accessing an advertiser server corresponding to the advertisement recorded on the medium through a communication network, when more than the predetermined time elapses or that more than the predetermined is counted in step (a1);
(a3) checking whether advertisement information that can be updated or needs to be updated exists in the advertisement recorded in the predetermined area when a link to the corresponding advertiser server is established;
(a4) updating the advertisement information when it is determined that the advertisement information exists in the step (a3); and
(a5) displaying the advertisement recorded in the predetermined area to be viewed or watched by the user when it is determined that the predetermined time does not elapse yet or the predetermined number of times has not yet been counted in step (a1) or that the advertisement information does not exist in the step (a3), or when the step (a4) is completed.

20. The method of claim 11, where in the step (a) is performed such that the advertisement is viewed or watched by the user through a predetermined area of an application program when the application program for performing reading or rewriting on the user area on the medium is called by the user.

21. The method of claim 20, wherein the step (a) comprises the steps of:
(a1) determining whether a difference between a previous call time for the application program and a current call time for the application program exceeds a predetermined time, or whether the number of calls for the application program exceeds a predetermined number;
(a2) accessing an advertiser server corresponding to the advertisement recorded on the medium through a communication network, when more than the predetermined time elapses or that more than the predetermined number is counted in step (a1) ;
(a3) checking whether advertisement information that can be updated or needs to be updated exists in the advertisement recorded in the predetermined area when a link to the corresponding advertiser server is established;
(a4) updating the advertisement information when it is determined that the advertisement information exists in the step (a3); and
(a5) displaying the advertisement recorded in the predetermined area to be viewed or watched by the user when the predetermined time has not yet elapsed or the predetermined number has not yet been counted in step (a1) or that the advertisement information does not exist in the step (a3), or when the step (a4) is completed.

22. The method of claim 20, wherein the application program includes an area for displaying the folder structure of the medium, an area for displaying the contents of the folder and an area for displaying an advertisement.

23. The method of claim 22, wherein the application program reads the advertisement recorded in the predetermined area such that the advertisement is displayed in the form of a banner through the area for displaying an advertisement.

24. The method of claim 11, wherein the step (a) comprises the steps of:
(a1) sequentially accessing advertisement contents of a plurality of advertisers, which are recorded in the predetermined area; and
(a2) displaying the advertisement contents to be viewed or watched by the user according to the order in which the contents are accessed in the step (a1).

25. The method of claim 11, wherein the step (a) comprises the steps of:
(a1) accessing the advertisement contents of a plurality of advertisers, which are recorded in the predetermined area, according to a predetermined order; and
(a2) displaying the advertisement contents to be viewed or watched by the user according to the predetermined order in the step (a1).

26. The method of claim 24, further comprising the step of (c) recording and managing the number of accesses to each content of advertisement displayed in the step (a2).

## Patentansprüche

1. Medium, das umfasst.
einen Reklamebereich (203), der Information bezüglich einer Reklame enthält, und
einen Benutzerbereich (204), von dem einem Benutzer Information zu lesen erlaubt ist, wenn der Benutzer die in dem Reklamebereich aufgezeichnete Information betrachtet oder beobachet, wobei das Medium **dadurch gekennzeichnet ist, dass** es umfasst:
Steuerinformation, die einem Benutzer erlaubt, Information in dem Benutzerbereich umzuschreiben, wenn der Benutzer die in dem Reklamebereich aufgezeichnete Information betrachtet oder beobachtet, und dadurch, dass der Reklamebereich (203) in zwei oder mehr getrennten Bereichen festgelegt ist, wobei wenigstens einer der zwei getrennten Bereiche ein Nurlese-Bereich ist und der andere Bereich(e) umschreibbar ist.

2. Medium nach Anspruch 1, wobei der Reklamebereich (203) in einem vorbestimmten Bereich angrenzend an einen Einführungsbereich (201) festgelegt ist.

3. Medium nach Anspruch 1 oder 2, das weiter einen Dateisystembereich umfasst, in dem Information bezüglich des Reklamebereiches (203, 203') so aufgezeichnet ist, dass der Benutzer die ganze reklamebezogene Information betrachtet oder beobachtet, wenn das Medium in eine Lesevorrichtung oder eine Lese- und Umschreibvorrichtung geladen wird.

4. Medium nach Anspruch 1 oder 2, das weiter einen Dateisystembereich umfasst, in dem Information bezüglich des Reklamebereiches (203, 203') so aufgezeichnet ist, dass der Benutzer die ganze reklamebezogene Information betrachtet oder beobachtet, wenn der Benutzer versucht, Information von dem Medium zum ersten Mal zu lesen.

5. Medium nach Anspruch 1 oder 2, das weiter einen Dateisystembereich (202, 202') umfasst, in dem Information bezüglich des Reklamebereiches so aufgezeichnet ist, dass der Benutzer die ganze reklamebezogene Information basierend auf einem Anwendungsprogramm betrachtet oder beobachtet, das der Benutzer aufruft, um Information in den Benutzerbereich zu schreiben oder daraus zu lesen.

6. Medium nach Anspruch 1 oder 2, das weiter einen Dateisystembereich (202, 202') umfasst, in dem Identifikationsinformation über einen Inserenten aufgezeichnet ist, um der Information in dem Reklamebereich zu erlauben, mit Daten aktualisiert zu werden, die durch den Inserenten durch ein Kommunikationsnetzwerk bereitgestellt werden.

7. Medium nach einem der vorangehenden Ansprüche, wobei Reklameinhalte einer Vielzahl von Inserenten in dem Reklamebereich aufgezeichnet sind.

8. Medium nach Anspruch 7, das weiter einen Dateisystembereich (202, 202') umfasst, in dem Information aufgezeichnet ist, die es erlaubt, auf die in dem Reklamebereich aufgezeichneten Reklameinhalte sequenziell zuzugreifen.

9. Medium nach Anspruch 7, das weiter einen Dateisystembereich (202, 202') umfasst, in dem Information bezüglich einer vorbestimmten Reihenfolge aufgezeichnet ist, die es erlaubt, auf die in dem Reklamebereich aufgezeichneten Reklameinhalte entsprechend der vorbestimmten Reihenfolge zuzugreifen.

10. Medium nach Anspruch 1, das weiter einen Dateisystembereich (202, 202') umfasst, in dem die Anzahl von Zugriffen auf eine in dem Reklamebereich aufgezeichnete Reklame aufgezeichnet wird.

11. Verfahren des Verwendens eines Mediums, das einen vorbestimmten Bereich, der Reklameinformation enthält, und einen Benutzerbereich umfasst, von dem einem Benutzer erlaubt ist, selektiv Information zu lesen oder Information darauf umzuschreiben, wobei das Verfahren die folgenden Schritte umfasst:
(a) Anzeigen einer in dem vorbestimmten Bereich aufgezeichneten Reklame, um von einem Benutzer betrachtet oder beobachtet zu werden, und
(b) Erlauben dem Benutzer, Information aus einem Benutzerbereich auf dem Medium nach dem Schritt (a) zu lesen,
wobei das Verfahren **dadurch gekennzeichnet ist, dass** der Schritt (b) weiter den Schritt umfasst, der dem Benutzer erlaubt, Information in dem Benutzerbereich basierend auf auf dem Medium aufgezeichneter Steuerinformation und der Vollendung von Schritt (a) umzuschreiben, und dadurch, dass der Reklamebereich (203) in zwei oder mehr getrennten Bereichen festgelegt ist, wobei wenigstens einer der zwei getrennten Bereiche ein Nurlese-Bereich und der andere Bereich(e) umschreibbar ist.

12. Verfahren nach Anspruch 11, wobei der Schritt (a) durchgeführt wird, wenn der Benutzer das Medium in die Lesevorrichtung oder die Lese- und Umschreibvorrichtung lädt.

13. Verfahren nach Anspruch 11, wobei der Schritt (a) die folgenden Schritte umfasst:
(a1) Zugreifen durch ein Kommunikationsnetzwerk auf einen Inserenten-Server, der der auf dem Medium aufgezeichneten Reklame entspricht, wenn das Medium in die Lesevorrichtung oder die Lese- und Umschreibvorrichtung geladen wird;
(a2) Prüfen, ob Reklameinformation, die aktualisiert werden kann oder aktualisiert werden muss, in der in dem vorbestimmten Bereich aufgezeichneten Reklame vorhanden ist, wenn eine Verbindung zu dem Inserenten-Server hergestellt wird;
(a3) Aktualisieren der Reklameinformation, wenn festgestellt wird, dass zu aktualisierende Reklameinformation vorhanden ist, und
(a4) Anzeigen der in dem vorbestimmten Bereich aufgezeichneten Reklame, um durch den Benutzer betrachtet oder beobachtet zu werden, wenn festgestellt wird, dass zu aktualisierende Reklameinformation nicht vorhanden ist, oder nach Schritt (a3).

14. Verfahren nach Anspruch 13, wobei die Schritte (a2) und (a3) auf einem einzelnen Rahmen oder einer einzelnen Reklameeinheit durchgeführt werden.

15. Verfahren nach Anspruch 13, wobei der Prüfvorgang in Schritt (a2) durch Kommunikation mit dem Inserenten-Server durchgeführt wird.

16. Verfahren nach Anspruch 12, wobei der Schritt (a) die folgenden Schritte umfasst:
(a1) Bestimmen, ob eine Differenz zwischen einer Zeit, zu der das Medium zuletzt geladen wurde, und einer Zeit, zu der das Medium gegenwärtig geladen wird, eine vorbestimmte Zeit überschreitet, oder ob die Zahl von Ladungen des Mediums eine vorbestimmte Anzahl überschreitet, wenn das Medium in die Lesevorrichtung oder die Lese- und Umschreibvorrichtung geladen wird;
(a2) Zugreifen auf einen Inserenten-Server, der der auf dem Medium aufgezeichneten Reklame entspricht, durch ein Kommunikationsnetzwerk, wenn festgestellt wird, dass mehr als die vorbestimmte Zeit vergeht, oder dass mehr als die vorbestimmte Anzahl gezählt wird;
(a3) Prüfen, ob Reklameinformation, die aktualisiert werden kann oder aktualisiert werden muss, in der in dem vorbestimmten Bereich aufgezeichneten Reklame vorhanden ist, wenn eine Verbindung zu dem entsprechenden Inserenten-Server hergestellt wird;
(a4) Aktualisieren der Reklameinformation, wenn festgestellt wird, dass die Reklameinformation im Schritt (a3) vorhanden ist, und
(a5) Anzeigen der in dem vorbestimmten Bereich aufgezeichneten Reklame, um durch den Benutzer betrachtet oder beobachtet zu werden, wenn die vorbestimmte Zeit noch nicht abgelaufen ist, oder die vorbestimmte Anzahl in Schritt (a1) nocht nicht gezählt ist, oder dass die Reklameinformation im Schritt (a3) nicht vorhanden ist, oder wenn der Schritt (a4) vollendet ist.

17. Verfahren nach Anspruch 13, wobei der Schritt (a1) Identifikationsinformation über den Inserenten-Server durch das Kommunikationsnetzwerk übermittelt, um den Zugriff durchzuführen.

18. Verfahren nach Anspruch 11, wobei der Schritt (a) durchgeführt wird, wenn ein Leseoder Umschreibvorgang auf dem Benutzerbereich auf dem Medium durch den Benutzer angefordert wird.

19. Verfahren nach Anspruch 18, wobei der Schritt (a) die folgenden Schritte umfasst:
(a1) Prüfen, ob eine Differenz zwischen einer vorherigen Anforderunszeit und einer gegenwärtigen Anforderungszeit eine vorbestimmte Zeit überschreitet, oder ob die Anzahl von Anforderungen eine vorbestimmte Anzahl überschreitet, wenn der Lese- oder Umschreibvorgang auf dem Benutzerbereich angefordert wird;
(a2) Zugreifen auf einen Inserenten-Server, der der auf dem Medium aufgezeichneten Reklame entspricht, durch ein Kommunikationsnetzwerk, wenn mehr als die vorbestimmte Zeit vergeht, oder dass mehr als die vorbestimmte Anzahl in Schritt (a1) gezählt wird;
(a3) Prüfen, ob Reklameinformation, die aktualisiert werden kann oder aktualisiert werden muss, in der in dem vorbestimmten Bereich aufgezeichneten Reklame vorhanden ist, wenn eine Verbindung zu dem entsprechenden Inserenten-Server hergestellt wird;
(a4) Aktualisieren der Reklameinformation, wenn festgestellt wird, dass die Reklameinformation in dem Schritt (a3) vorhanden ist, und
(a5) Anzeigen der in dem vorbestimmten Bereich aufgezeichneten Reklame, um durch den Benutzer betrachtet oder beobachtet zu werden, wenn festgestellt wird, dass die vorbestimmte Zeit noch nicht abgelaufen ist, oder die vorbestimmte Zahl von Malen in Schritt (a1) noch nicht gezählt wurde, oder dass die Reklameinformation in dem Schritt (a3) nicht vorhanden ist, oder wenn der Schritt (a4) vollendet ist.

20. Verfahren nach Anspruch 11, wobei der Schritt (a) so durchgeführt wird, dass die Reklame von dem Benutzer durch einen vorbestimmten Bereich eines Anwendungsprogramms betrachtet oder beobachtet wird, wenn das Anwendungsprogramm zum Durchführen von Lesen oder Umschreiben auf dem Benutzerbereich auf dem Medium durch den Benut-zer aufgerufen wird.

21. Verfahren nach Anspruch 20, wobei der Schritt (a) die folgenden Schritte umfasst:
(a1) Bestimmen, ob eine Differenz zwischen einer vorherigen Aufrufzeit für das Anwendungsprogramm und einer gegenwärtigen Aufrufzeit für das Anwendungsprogramm eine vorbestimmte Zeit überschreitet, oder ob die Anzahl von Aufrufen für das Anwendungsprogramm eine vorbestimmte Anzahl überschreitet;
(a2) Zugreifen auf einen Inserenten-Server, der der auf dem Medium aufgezeichneten Reklame entspricht, durch ein Kommunikationsnetzwerk, wenn mehr als die vorbestimmte Zeit vergeht, oder dass mehr als die vorbestimmte Anzahl in Schritt (a1) gezählt wird;
(a3) Prüfen, ob Reklameinformation, die aktualisiert werden kann oder aktualisiert werden muss, in der in dem vorbestimmten Bereich aufgezeichneten Reklame vorhanden ist, wenn eine Verbindung zu dem entsprechenden Inserenten-Server hergestellt wird;
(a4) Aktualisieren der Reklameinformation, wenn festgestellt wird, dass die Reklameinformation in dem Schritt (a3) vorhanden ist, und
(a5) Anzeigen der in dem vorbestimmten Bereich aufgezeichneten Reklame, um durch den Benutzer betrachtet oder beobachtet zu werden, wenn die vorbestimmte Zeit nocht nicht abgelaufen ist, oder die vorbestimmte Zahl Anzahl in Schritt (a1) noch nicht gezählt wurde, oder dass die Reklameinformation in dem Schritt (a3) nicht vorhanden ist, oder wenn der Schritt (a4) vollendet ist.

22. Verfahren nach Anspruch 20, wobei das Anwendungsprogramm einen Bereich zum Anzeigen der Hefter-Struktur des Mediums, einen Bereich zum Anzeigen des Inhalts des Hefters und einen Bereich zum Anzeigen einer Reklame enthält.

23. Verfahren nach Anspruch 22, wobei das Anwendungsprogramm die in dem vorbestimmten Bereich aufgezeichnete Reklame so liest, dass die Reklame in der Form eines Banners durch den Bereich zum Anzeigen einer Reklame angezeigt wird.

24. Verfahren nach Anspruch 11, wobei der Schritt (a) die folgenden Schritte umfasst:
(a1 ) Sequenziell Zugreifen auf die Reklameinhalte einer Vielzahl von Inserenten, die in dem vorbestimmten Bereich aufgezeichnet sind, und
(a2) Anzeigen der Reklameinhalte, um von dem Benutzer entsprechend der Reihenfolge betrachtet oder beobachtet zu werden, in der in Schritt (a1) auf die Inhalte zugegriffen wird.

25. Verfahren nach Anspruch 11, wobei der Schritt (a) die folgenden Schritte umfasst:
(a1) Zugreifen auf die Reklameinhalte einer Vielzahl von Inserenten, die in dem vorbestimmten Bereich aufgezeichnet sind, entsprechend einer vorbestimmten Reihenfolge, und
(a2) Anzeigen der Reklameinhalte, um von dem Benutzer entsprechend der vorbestimmten Reihenfolge in dem Schritt (a1) betrachtet oder beobachtet zu werden.

26. Verfahren nach Anspruch 24, das weiter den Schritt (c) des Aufzeichnens und Verwaltens der Anzahl von Zugriffen auf jeden in Schritt (a2) angezeigten Reklameinhalt umfasst.

## Revendications

1. Support comportant :
une zone publicitaire (203) incluant des informations relatives à une publicité, et
une zone utilisateur (204) à partir de laquelle un utilisateur est autorisé à lire des informations lorsque l'utilisateur visualise ou regarde les informations enregistrées dans la zone publicitaire, le support étant **caractérisé en ce qu'**il comporte :
des informations de commande pour permettre à un utilisateur de réécrire des informations dans la zone utilisateur lorsque l'utilisateur visualise ou regarde les informations enregistrées dans la zone publicitaire, et **en ce que** la zone publicitaire (203) est établie dans deux ou plus de deux zones séparées, au moins l'une des deux zones séparées étant une zone à lecture seule et la ou les autres zones étant réinscriptibles.

2. Support selon la revendication 1, dans lequel la zone publicitaire (203) est établie dans une zone prédéterminée adjacente à une zone d'entrée (201).

3. Support selon les revendications 1 ou 2, comportant en outre une zone de système de fichiers dans laquelle des informations relatives à la zone publicitaire (203, 203') sont enregistrées de sorte que l'utilisateur visualise ou regarde toutes les informations relatives à une publicité lorsque le support est chargé dans un dispositif de lecture ou un dispositif de lecture et réécriture.

4. Support selon les revendications 1 ou 2, comportant en outre une zone de système de fichiers dans laquelle des informations relatives à la zone publicitaire (203, 203') sont enregistrées de sorte que l'utilisateur visualise ou regarde toutes les informations relatives à une publicité lorsque l'utilisateur essaie de lire des informations à partir du support pour la première fois.

5. Support selon les revendications 1 ou 2, comportant en outre une zone de système de fichiers (202, 202') dans laquelle des informatives relatives à la zone publicitaire sont enregistrées de sorte que l'utilisateur visualise ou regarde toutes les informations relatives à une publicité sur la base d'un programme d'application que l'utilisateur appelle pour écrire des informations dans la zone utilisateur ou lire des informations depuis celle-ci.

6. Support selon les revendications 1 ou 2, comportant en outre une zone de système de fichiers (202, 202') dans laquelle des informations d'identification concernant un annonceur sont enregistrées pour permettre la mise à jour des informations dans la zone publicitaire à l'aide de données délivrées par l'annonceur via un réseau de communication.

7. Support selon l'une quelconque des revendications précédentes, dans lequel des contenus de publicité d'une pluralité d'annonceurs sont enregistrés dans la zone publicitaire.

8. Support selon la revendication 7, comportant en outre une zone de système de fichiers (202, 202') dans laquelle des informations permettant aux contenus de publicité enregistrés dans la zone publicitaire de faire séquentiellement l'objet d'un accès sont enregistrées.

9. Support selon la revendication 7, comportant en outre une zone de système de fichiers (202, 202') dans laquelle des informations relatives à un ordre prédéterminé sont enregistrées pour permettre aux contenus publicitaires enregistrés dans la zone publicitaire de faire l'objet d'un accès conformément à l'ordre prédéterminé.

10. Support selon la revendication 1, comportant en outre une zone de système de fichiers (202, 202') dans laquelle le nombre d'accès à une publicité enregistrée dans la zone publicitaire est enregistré.

11. Procédé d'utilisation d'un support comportant une zone prédéterminée incluant des informations de publicité et une zone utilisateur à partir de laquelle un utilisateur est autorisé de manière sélective à lire des informations ou dans laquelle il est autorisé à réécrire des informations, le procédé comportant les étapes consistant à :
(a) afficher une publicité enregistrée dans la zone prédéterminée à visualiser ou à regarder par un utilisateur, et
(b) autoriser l'utilisateur à lire des informations depuis une zone utilisateur sur le support après l'étape (a),
le procédé étant **caractérisé en ce que** l'étape (b) comporte en outre l'étape consistant à autoriser l'utilisateur à réécrire des informations dans la zone utilisateur sur la base des informations de commande enregistrées sur le support et de l'exécution de l'étape (a), et **en ce que** la zone publicitaire (203) est établie en deux ou plus de deux zones séparées, au moins l'une des deux zones séparées étant une zone à lecture seule et la ou les autres zones étant réinscriptibles.

12. Procédé selon la revendication 11, dans lequel l'étape (a) est exécutée lorsque l'utilisateur charge le support dans le dispositif de lecture ou dans le dispositif de lecture et réécriture.

13. Procédé selon la revendication 11, dans lequel l'étape (a) comporte les étapes consistant à :
(a1) accéder via un réseau de communication à un serveur d'un annonceur correspondant à la publicité enregistrée sur le support lorsque le support est chargé dans le dispositif de lecture ou le dispositif de lecture et réécriture,
(a2) contrôler si les informations de publicité qui peuvent être mises à jour ou doivent être mises à jour existent dans la publicité enregistrée dans la zone prédéterminée lorsqu'une liaison avec le serveur d'un annonceur est établie,
(a3) mettre à jour les informations de publicité lorsqu'il est déterminé que les informations de publicité à mettre à jour existent, et
(a4) afficher la publicité enregistrée dans la zone prédéterminée à visualiser ou à regarder par l'utilisateur lorsqu'il est déterminé que des informations de publicité à mettre à jour n'existent pas ou après l'étape (a3).

14. Procédé selon la revendication 13, dans lequel les étapes (a2) et (a3) sont exécutées sur un plan unique ou une unité publicitaire unique.

15. Procédé selon la revendication 13, dans lequel l'opération de contrôle à l'étape (a2) est exécutée via une communication avec le serveur d'un annonceur.

16. Procédé selon la revendication 12, dans lequel l'étape (a) comporte les étapes consistant à :
(a1) déterminer si une différence entre une durée lorsque le support a été chargé la dernière fois et une durée lorsque le support est actuellement chargé dépasse une durée prédéterminée, ou si le nombre de chargements du support dépasse un nombre prédéterminé, lorsque le support est chargé dans le dispositif de lecture ou le dispositif de lecture et réécriture,
(a2) accéder au serveur d'un annonceur correspondant à la publicité enregistrée sur le support via un réseau de communication, lorsqu'il est déterminé qu'une durée plus longue que la durée prédéterminée s'est écoulée ou qu'un nombre supérieur au nombre prédéterminé a été atteint,
(a3) contrôler si les informations de publicité qui peuvent être mises à jour ou doivent être mises à jour existent dans la publicité enregistrée dans la zone prédéterminée lorsqu'une liaison avec le serveur d'un annonceur correspondant est établie,
(a4) mettre à jour les informations de publicité lorsqu'il est déterminé que les informations de publicité existent à l'étape (a3), et
(a5) afficher la publicité enregistrée dans la zone prédéterminée à visualiser ou à regarder par l'utilisateur lorsque la durée prédéterminée n'est pas encore écoulée ou que le nombre prédéterminé n'a pas encore été atteint à l'étape (a1) ou que les informations de publicité n'existent pas à l'étape (a3), ou lorsque l'étape (a4) est terminée.

17. Procédé selon la revendication 13, dans lequel l'étape (a1) achemine des informations d'identification sur le serveur d'un annonceur via le réseau de communication afin de réaliser l'accès.

18. Procédé selon la revendication 11, dans lequel l'étape (a) est exécutée lorsqu'une opération de lecture ou réécriture sur la zone utilisateur sur le support est demandée par l'utilisateur.

19. Procédé selon la revendication 18, dans lequel l'étape (a) comporte les étapes consistant à :
(a1) contrôler si une différence entre une durée de demande précédente et une durée de demande courante dépasse une durée prédéterminée ou si le nombre de demandes dépasse un nombre prédéterminé lorsque l'opération de lecture ou de réécriture sur la zone utilisateur est demandée,
(a2) accéder au serveur d'un annonceur correspondant à la publicité enregistrée sur le support via un réseau de communication, lorsqu'une durée plus longue que la durée prédéterminée s'est écoulée ou lorsqu'un nombre supérieur au nombre prédéterminé a été atteint à l'étape (a1),
(a3) contrôler si des informations de publicité qui peuvent être mises à jour ou doivent être mises à jour existent dans la publicité enregistrée dans la zone prédéterminée lorsqu'une liaison avec le serveur d'un annonceur correspondant est établie,
(a4) mettre à jour les informations de publicité lorsqu'il est déterminé que les informations de publicité existent à l'étape (a3), et
(a5) afficher la publicité enregistrée dans la zone prédéterminée à visualiser ou à regarder par l'utilisateur lorsqu'il est déterminé que la durée prédéterminée n'est pas encore écoulée ou que le nombre prédéterminé n'a pas encore été atteint à l'étape (a1) ou que les informations de publicité n'existent pas à l'étape (a3), ou lorsque l'étape (a4) est terminée.

20. Procédé selon la revendication 11, dans lequel l'étape (a) est exécutée de sorte que la publicité est visualisée ou regardée par l'utilisateur via une zone prédéterminée d'un programme d'application lorsque le programme d'application destiné à effectuer une lecture ou une réécriture sur la zone utilisateur sur le support est appelé par l'utilisateur.

21. Procédé selon la revendication 20, dans lequel l'étape (a) comporte les étapes consistant à :
(a1) déterminer si une différence entre une durée d'appel précédente pour le programme d'application et une durée d'appel courante pour le programme d'application dépasse une durée prédéterminée, ou si le nombre d'appels pour le programme d'application dépasse un nombre prédéterminé,
(a2) accéder au serveur d'un annonceur correspondant à la publicité enregistrée sur le support via un réseau de communication, lorsqu'une durée plus longue que la durée prédéterminée s'est écoulée ou lorsqu'un nombre supérieur au nombre prédéterminé a été atteint à l'étape (a1),
(a3) contrôler si des informations de publicité qui peuvent être mises à jour ou doivent être mises à jour existent dans la publicité enregistrée dans la zone prédéterminée lorsqu'une liaison avec le serveur d'un annonceur correspondant est établie,
(a4) mettre à jour les informations de publicité lorsqu'il est déterminé que les informations de publicité existent à l'étape (a3), et
(a5) afficher la publicité enregistrée dans la zone prédéterminée à visualiser ou à regarder par l'utilisateur lorsque la durée prédéterminée n'est pas encore écoulée ou que le nombre prédéterminé n'a pas encore été atteint à l'étape (a1) ou que les informations de publicité n'existent pas à l'étape (a3), ou lorsque l'étape (a4) est terminée.

22. Procédé selon la revendication 20, dans lequel le programme d'application inclut une zone destinée à afficher la structure de dossier du support, une zone destinée à afficher le contenu du dossier et une zone destinée à afficher une publicité.

23. Procédé selon la revendication 22, dans lequel le programme d'application lit la publicité enregistrée dans la zone prédéterminée de sorte que la publicité est affichée sous la forme d'un bandeau publicitaire via la zone destinée à afficher une publicité.

24. Procédé selon la revendication 11, dans lequel l'étape (a) comporte les étapes consistant à :
(a1) accéder de manière séquentielle aux contenus de publicité d'une pluralité d'annonceurs, qui sont enregistrés dans la zone prédéterminée, et
(a2) afficher le contenu de publicité à visualiser ou à regarder par l'utilisateur conformément à l'ordre dans lequel les contenus font l'objet d'un accès à l'étape (a1).

25. Procédé selon la revendication 11, dans lequel l'étape (a) comporte les étapes consistant à :
(a1) accéder aux contenus de publicité d'une pluralité d'annonceurs, qui sont enregistrés dans la zone prédéterminée, conformément à un ordre prédéterminé, et
(a2) afficher les contenus de publicité à visualiser ou à regarder par l'utilisateur conformément à l'ordre prédéterminé à l'étape (a1).

26. Procédé selon la revendication 24, comportant en outre l'étape consistant à (c) enregistrer et gérer le nombre d'accès à chaque contenu de publicité affiché à l'étape (a2).
